# EUROPÄISCHE PATENTSCHRIFT

(11) **EP 4 252 502 B1**
(45) Veröffentlichungstag und Bekanntmachung des Hinweises auf die Patenterteilung: **11.09.2024**
(21) Anmeldenummer: 23186591.6
(22) Anmeldetag: 01.03.2021
(51) Int. Cl.: A01B 15/16, A01B 23/06

(54) **BODENBEARBEITUNGSWERKZEUG**
SOIL WORKING TOOL
OUTIL DE TRAVAIL DU SOL

(30) Priorität: 10.03.2020 DE 102020106390
(43) Veröffentlichungstag der Anmeldung: 04.10.2023
(62) Teilanmeldung aus: 21401011.8
(73) Patentinhaber: Amazonen-Werke H. Dreyer SE & Co. KG, 49205 Hasbergen (DE)
(72) Erfinder: Scherf, Silvio, 39444 Hecklingen OT Cochstedt (DE); Wolfrum, Thomas, 04229 Leipzig (DE)

(56) Entgegenhaltungen:
- EP-B1- 3 027 339
- US-A1- 2010 147 541
- US-A1- 2011 162 856
- US-A1- 2011 240 319

## Beschreibung

Die Erfindung betrifft ein Bodenbearbeitungswerkzeug nach dem Oberbegriff des Patentanspruchs 1 und eine Bodenbearbeitungsmaschine nach dem Oberbegriff des Patentanspruchs 9.

Derartige Bodenbearbeitungswerkzeuge sind in EP 3 027 339 B1, US 2010/14754 A1, EP 3 571 906 A1, US 2002/038620 A1 und US 2011/240319 A1, sowie US 2011/162856 A1 offenbart. Diesen Bodenbearbeitungswerkzeugen ist gemein, dass sie einen Scheibenkörper mit umlaufender Schneidkante aufweisen, wobei die Schneidkante eine Wellenform aufweist. In der DE 20 2017 007049 U1 ist eine Bodenbearbeitungsmaschine mit zwei Gruppen von Bodenbearbeitungswerkzeugen, nämlich einer hinteren und einer vorderen Reihe, offenbart. Die Bodenbearbeitungswerkzeuge sind auch hier mit einer Schneidkante in Wellenform ausgeführt.

Bodenbearbeitungswerkzeuge, welche zum Auflockern des Bodens einer landwirtschaftlichen Nutzfläche eingesetzt werden, weisen häufig einen Scheibenkörper mit einer umlaufenden Schneidkante auf. Der Scheibenkörper taucht bei der Bodenbearbeitung in das Erdreich ein, sodass die umlaufende Schneidkante während einer Rotationsbewegung Erntereste oder Schadbewuchs zerschneiden kann.

Bodenbearbeitungsmaschinen weisen üblicherweise eine Mehrzahl von Bodenbearbeitungswerkzeugen auf, welche entlang einer oder mehrerer Bodenbearbeitungsreihen quer zur Fahrtrichtung angeordnet sind. Die Bodenbearbeitungswerkzeuge können dabei unter einem Anstellwinkel seitlich gekippt durch das Erdreich bewegt werden, damit eine effektive ganzflächige Bodenbearbeitung über die gesamte Arbeitsbreite der Bodenbearbeitungsmaschine erfolgen kann.

Der Anstellwinkel erhöht jedoch die Vibrationsneigung der Bodenbearbeitungswerkzeuge und ist zur Erzielung eines ruhigen und vibrationsarmen Laufs über die Geometrie der Scheibenkörper zu kompensieren. In diesem Zusammenhang ist aus der Druckschrift DE 20 2017 007 049 U1 ein Scheibenwerkzeug bekannt, dessen Schneidkante aus Kurvensegmenten und gradlinigen Segmenten zusammengesetzt ist.

Dieses und andere aus dem Stand der Technik bekannte Werkzeuggestaltungen können die durch den Anstellwinkel verursachte Vibrationsneigung des Bodenbearbeitungswerkzeugs jedoch nur in einem geringen Maße reduzieren.

Die Aufgabe der Erfindung besteht somit darin, die Laufruhe und das Vibrationsverhalten von scheibenförmigen Bodenbearbeitungswerkzeugen weiter zu verbessern.

Die Aufgabe wird gelöst durch ein Bodenbearbeitungswerkzeug mit den Merkmalen des Anspruchs 1. Es ist vorgesehen, dass die Schneidkante des erfindungsgemäßen Bodenbearbeitungswerkzeugs eine Wellenform aufweist.

Durch die Wellenform der Schneidkante werden gradlinige Schneidkantenabschnitte vermieden, sodass der Scheibenkörper beim Ausführen einer Drehbewegung während des Erdeingriffs gleichmäßig mechanisch belastet wird. Dies steigert die Laufruhe und verringert die Vibrationsneigung des Bodenbearbeitungswerkzeugs.

Der Scheibenkörper weist vorzugsweise ein umlaufendes gewelltes Scheibensegment auf, wobei das gewellte Scheibensegment die umlaufende Schneidkante trägt. Das gewellte Scheibensegment weist außerhalb des Schneidkantenbereichs vorzugsweise eine konstante Materialstärke auf. Im Schneidkantenbereich weist der Scheibenkörper keine kontante Materialstärke auf, sodass eine nach außen hin abfallende Schneidkante gebildet wird. Der Scheibenkörper ist vorzugsweise dazu eingerichtet, während der Bewegung durch den Boden eine Scheibenrotation auszuführen. Der Scheibenkörper kann aus Metall oder einer Metalllegierung ausgebildet sein. Ferner kann der Scheibenkörper zumindest teilweise auch aus Kunststoff ausgebildet sein.

In einer bevorzugten Ausführungsform des erfindungsgemäßen Bodenbearbeitungswerkzeugs ist die Schneidkante durchgängig geschwungen ausgebildet. Die Schneidkante ist vorzugsweise durchgängig gekrümmt ausgebildet. Die Schneidkante weist vorzugsweise keine gradlinigen Abschnitte auf. Trotz der durchgängigen geschwungenen Form kann die Schneidkante abschnittsweise unterbrochen sein. Das umlaufende gewellte Scheibensegment des Scheibenkörpers ist vorzugsweise durchgängig geschwungen ausgebildet und/oder weist eine durchgängige Krümmung auf. Insbesondere weist das umlaufende gewellte Scheibensegment des Scheibenkörpers keinen planen Abschnitte auf.

In einer weiteren Ausführungsform des erfindungsgemäßen Bodenbearbeitungswerkzeugs folgt die Wellenform der Schneidkante einer periodischen Funktion. Alternativ oder zusätzlich weist die Wellenform der Schneidkante eine Sinusform auf. Dadurch, dass die Wellenform der Schneidkante einer periodischen Funktion folgt, ergibt sich eine gleichmäßige Wendelung der Schneidkante. Durch die gleichmäßige Wendelung der Schneidkante wird ein ruhiger Lauf beim Eingriff in den Boden erreicht und lediglich ein geringer Vibrationseintrag in den Maschinenrahmen der Bodenbearbeitungsmaschine verursacht. Die Wellenform der Schneidkante kann eine gestauchte oder gestreckte Sinusform aufweisen.

Gemäß dem erfindungsgemäßen Bodenbearbeitungswerkzeug weist die Schneidkante eine Axialerstreckung zwischen den Begrenzungsebenen gemäß Anspruch 1 in einem Bereich von 8 bis 17 cm auf Insbesondere weist die Schneidkante eine Axialerstreckung in einem Bereich von 9 bis 13 cm auf. Die Axialerstreckung der Schneidkante entspricht vorzugsweise der Schneidkantenhöhe, also dem Abstand zwischen oberseitigen Wellenkämmen und unterseitigen Wellenkämmen der Schneidkante. Eine Schneidkante mit einer Axialerstreckung zwischen 8 und 17 cm bzw. zwischen 9 und 13 cm ermöglicht die Umsetzung einer vorteilhaften Schneidkantenwendelung, welche einen besonders vibrationsarmen Lauf des Bodenbearbeitungswerkzeugs erlaubt.

Es ist ferner ein erfindungsgemäßes Bodenbearbeitungswerkzeug vorteilhaft, bei welchem die Schneidkante 10 bis 14 Wellenkämme aufweist. Insbesondere weist die Schneidkante exakt 12 Wellenkämme auf. Vorzugsweise weist die Schneidkante 5 bis 7 oberseitige Wellenkämme und 5 bis 7 unterseitige Wellenkämme auf. Es ist besonders bevorzugt, dass die Schneidkante jeweils 5 unterseitige und 5 oberseitige Wellenkämme aufweist.

In einer vorteilhaften Weiterbildung des erfindungsgemäßen Bodenbearbeitungswerkzeugs weist die Schneidkante mehrere Unterbrechungen auf. Die Unterbrechungen können gleichmäßig über den Umfang der Schneidkante verteilt sein. Die Unterbrechungen können durch Einbuchtungen gebildet werden, welche sich von der Schneidkante in Radialrichtung nach innen erstrecken. Die Einbuchtungen können beispielsweise halbkreisförmig ausgebildet sein. Über die Unterbrechungen in der Schneidkante kann die Schneidleistung erhöht werden. Ferner wird durch die Unterbrechungen in der Schneidkante ein Anhaften von Ernteresten oder Schadbewuchs an dem Scheibenkörper vermieden. Alternativ kann die Schneidkante auch unterbrechungsfrei umlaufen.

Das erfindungsgemäße Bodenbearbeitungswerkzeug ist dadurch gekennzeichnet, dass der Scheibenkörper einen ungewellten Montagebereich aufweist, welcher innerhalb einer Montageebene liegt, wobei die wellenförmige Schneidkante zwischen zwei parallelen Begrenzungsebenen verläuft. Die Montageebene und die Begrenzungsebenen verlaufen vorzugsweise parallel zueinander. Die Rotationsachse des Scheibenkörpers verläuft vorzugsweise orthogonal zu der Montageebene und/oder orthogonal zu den Begrenzungsebenen. Das gewellte Scheibensegment des Scheibenkörpers schließt sich radial an den ungewellten Montagebereich des Scheibenkörpers an. Die Wellenkämme auf einer ersten Seite des Scheibenkörpers liegen in einer ersten Begrenzungsebene. Die Wellenkämme auf einer zweiten Seite des Scheibenkörpers liegen in einer zweiten Begrenzungsebene. Die Begrenzungsebenen weisen einen Abstand im Bereich von 8 bis 17 cm auf. Insbesondere beträgt der Abstand zwischen den Begrenzungsebenen zwischen 9 und 13 cm.

Gemäß dem erfindungsgemäßen Bodenbearbeitungswerkzeug ist der ungewellte Montagebereich des Scheibenkörpers und/oder dessen Montageebene außerhalb eines sich zwischen den Begrenzungsebenen erstreckenden Schneidkantenverlaufsbereichs angeordnet. Der ungewellte Montagebereich des Scheibenkörpers und/oder dessen Montageebene können oberhalb oder unterhalb des Schneidkantenverlaufsbereichs angeordnet sein. Die Montageebene des ungewellten Montagebereichs schneidet somit nicht die umlaufende Schneidkante. Der ungewellte Montagebereich des Scheibenkörpers und/oder dessen Montageebene liegen also nicht zwischen den Begrenzungsebenen.

In einer weiteren bevorzugten Ausführungsform des erfindungsgemäßen Bodenbearbeitungswerkzeugs weist der Scheibenkörper eine Rotationsachse auf und die Schneidkante verläuft geneigt gegenüber der Rotationsachse. Der Neigungswinkel zwischen der Rotationsachse des Scheibenkörpers und der Schneidkante liegt vorzugsweise in einem Bereich zwischen 7 und 12 Grad, insbesondere bei 9 Grad. Aufgrund der geneigten Ausrichtung der Schneidkante gegenüber der Rotationsachse ergibt sich ein konischer Schneidkantenverlauf und eine sich nach oben oder unten verjüngende Wellenform. Die Schneidkante liegt somit nicht in einer zylindrisch umlaufenden Umfangsfläche.

Es ist außerdem ein erfindungsgemäßes Bodenbearbeitungswerkzeug bevorzugt, bei welchem die Schneidkante in einer fiktiven Mantelfläche eines Kegelstumpfes liegt. Die fiktive Mantelfläche des Kegelstumpfes kann auch gewölbt bzw. bauchig ausgebildet sein.

Die der Erfindung zugrundeliegende Aufgabe wird ferner durch eine Bodenbearbeitungsmaschine der eingangs genannten Art gelöst, wobei zumindest ein Bodenbearbeitungswerkzeug der ersten Gruppe und zumindest ein Bodenbearbeitungswerkzeug der zweiten Gruppe nach einer der vorstehend beschriebenen Ausführungsformen ausgebildet ist. Hinsichtlich der Vorteile und Modifikationen der erfindungsgemäßen Bodenbearbeitungsmaschine wird somit zunächst auf die Vorteile und Modifikationen des erfindungsgemäßen Bodenbearbeitungswerkzeugs verwiesen.

Die Bodenbearbeitungsmaschine weist vorzugsweise ein zweireihiges Scheibenfeld auf. Die mit der Bodenbearbeitungsmaschine realisierbare Arbeitstiefe liegt vorzugsweise in einem Bereich zwischen 3 und 8 cm. Die erste Bodenbearbeitungsreihe und die zweite Bodenbearbeitungsreihe sind vorzugsweise beabstandet voneinander und/oder verlaufen parallel zueinander. Die Bodenbearbeitungswerkzeuge sind jeweils an einem Montagebereich an einem Werkzeughalter montiert. Die Werkzeughalter können als Trägerarme ausgebildet sein. Ferner können die Werkzeughalter verdrehbar und/oder verkippbar sein. Die Werkzeughalter können an einem Querbalken eines Maschinenrahmens befestigt sein.

In einer bevorzugten Ausführungsform der erfindungsgemäßen Bodenbearbeitungsmaschine weisen die Bodenbearbeitungswerkzeuge der ersten Bodenbearbeitungsreihe einen ersten Anstellwinkel auf und die Bodenbearbeitungswerkzeuge der zweiten Bodenbearbeitungsreihe weisen einen von dem ersten Anstellwinkel abweichenden zweiten Anstellwinkel auf. Der Anstellwinkel eines Bodenbearbeitungswerkzeugs ist der Winkel zwischen der Werkzeugebene des Bodenbearbeitungswerkzeugs und einer in Fahrtrichtung verlaufenden Vertikalebene. Die Werkzeugebene verläuft dabei parallel zu der Montageebene des Bodenbearbeitungswerkzeugs. Durch die Anstellwinkel ergibt sich in Kombination mit der Wendelung der Schneidkante ein Hobeleffekt beim Eingriff in den Boden.

In einer besonders bevorzugten Ausführungsform der erfindungsgemäßen Bodenbearbeitungsmaschine liegt erste Anstellwinkel der ersten Bearbeitungsreihe in einem Bereich zwischen 5 und 20 Grad, insbesondere bei 17 Grad, und/oder der zweite Anstellwinkel der zweiten Bearbeitungsreihe liegt in einem Bereich zwischen 5 und 18 Grad, insbesondere bei 14 Grad. Bei Anstellung der ersten und/oder zweiten Bearbeitungsreihe in vorstehender Weise ist der Hobeleffekt besonders stark ausgeprägt, so dass eine sehr flache Bodenbearbeitung bei gleichzeitig intensiver Durchmischung ermöglicht ist. Ferner ist die Bodenbearbeitungsmaschine zur besonders vorteilhaften, flächendeckenden Bodenbearbeitung eingerichtet, das heißt, dass zwischen den Bodenbearbeitungswerkzeugen keine unbearbeiteten Streifen verbleiben.

Die Bodenbearbeitungswerkzeuge weisen vorzugsweise einen Kippwinkel zum Boden auf. Der Kippwinkel eines Bodenbearbeitungswerkzeugs ist der Winkel zwischen der Rotationsachse des Bodenbearbeitungswerkzeugs und einer sich in Querrichtung erstreckenden Horizontalachse. Der Kippwinkel der Bodenbearbeitungswerkzeuge liegt vorzugsweise in einem Bereich zwischen 3 und 15 Grad, insbesondere in einem Bereich zwischen 5 und 6 Grad.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Bodenbearbeitungswerkzeugs in einer perspektivischen Darstellung;
- Fig. 2: das in der Fig. 1 abgebildete Bodenbearbeitungswerkzeug in einer Seitenansicht;
- Fig. 3: das in der Fig. 1 abgebildete Bodenbearbeitungswerkzeug in einer Draufsicht;
- Fig. 4: einen Teil einer erfindungsgemäßen Bodenbearbeitungsmaschine in einer Draufsicht;
- Fig. 5: ein Bodenbearbeitungswerkezug einer erfindungsgemäßen Bodenbearbeitungsmaschine in einer Darstellung von hinten; und
- Fig. 6: einen Teil einer erfindungsgemäßen Bodenbearbeitungsmaschine in einer Ansicht von unten.

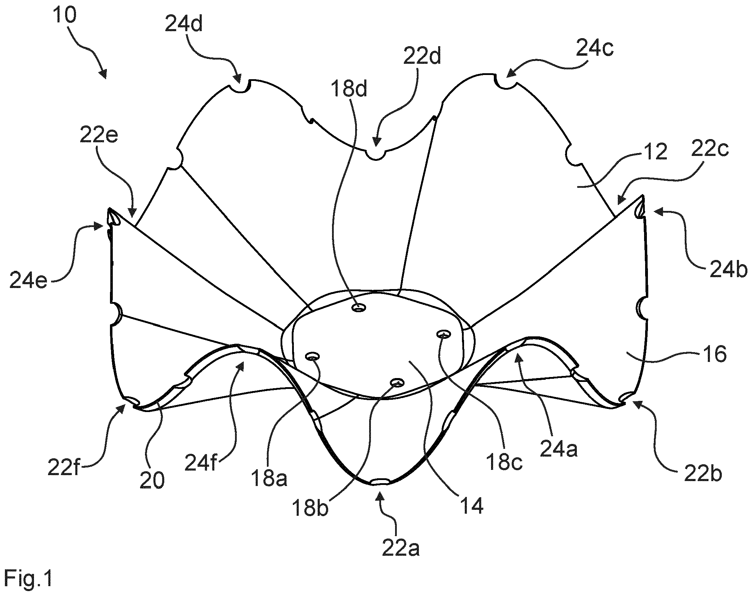

Die Fig. 1 bis 3 zeigen ein Bodenbearbeitungswerkzeug 10 für eine Bodenbearbeitungsmaschine 100.

In der Fig. 1 ist dargestellt, dass das Bodenbearbeitungswerkzeug 10 einen Scheibenkörper 12 umfasst. Der Scheibenkörper 12 weist einen planen Montagebereich 14 auf, an welchen sich in Radialrichtung ein umlaufendes gewelltes Scheibensegment 16 anschließt. Der ungewellte Montagebereich 14 weist mehrere, vorliegend 4, Montageausnehmungen 18a-18d auf, welche als Durchgangslöcher ausgebildet sind. Über die Montageausnehmungen 18a-18d kann das Bodenbearbeitungswerkzeug 10 an einem Werkzeughalter 106a, 106b befestigt werden.

Der Scheibenkörper 12 weist eine umlaufende Schneidkante 20 auf, wobei die Schneidkante 20 wellenförmig ausgebildet ist. Das gewellte Scheibensegment 16 des Scheibenkörpers 12 trägt die umlaufende Schneidkante 20. Mit Ausnahme der Schneidkante 20 weist der Scheibenkörper 12 eine konstante Materialstärke auf. Die Schneidkante 20 ist durchgängig geschwungen bzw. durchgängig gekrümmt ausgebildet und weist keine gradlinigen Abschnitte auf. Die Wellenform der Schneidkante 20 folgt einer periodischen Funktion und ist vorliegend sinusförmig ausgebildet. Aufgrund der Sinusform der Schneidkante 20 ergeben sich insgesamt exakt 12 Wellenkämme 22a-22f, 24a-24f. Die Wellenkämme 22a-22f, 24a-24f lassen sich dabei in untere Wellenkämme 22a-22f und obere Wellenkämme 24a-24f unterteilen.

Der Scheibenkörper 12 ist dazu eingerichtet, während der Bewegung durch einen Boden einer landwirtschaftlichen Nutzfläche eine Scheibenrotation auszuführen. Während der Scheibenrotation kommt es zum Auflockern des Bodens, wobei mittels der Schneidkante 20 während der Rotationsbewegung Erntereste und Schadbewuchs zerschnitten werden. Über die erfindungsgemäße Scheibengeometrie wird ein ruhiger und vibrationsarmer Lauf des Bodenbearbeitungswerkzeugs 10 umgesetzt.

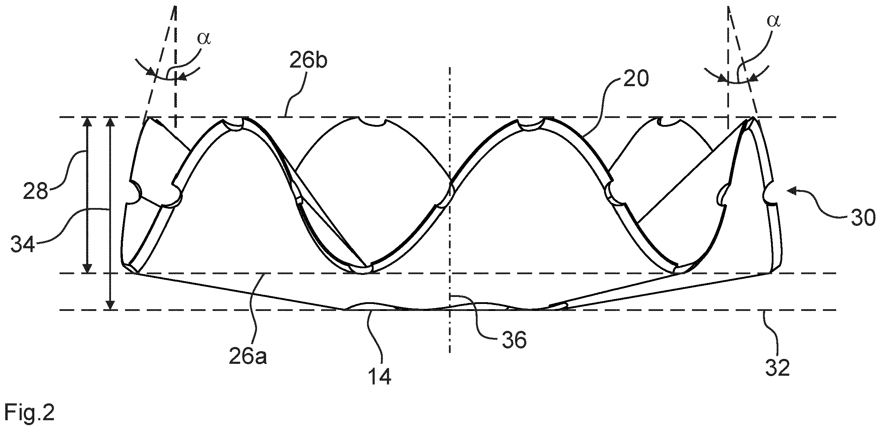

Die Fig. 2 zeigt, dass die wellenförmige Schneidkante zwischen zwei parallelen Begrenzungsebenen 26a, 26b verläuft. Die Schneidkante 20 verläuft somit innerhalb eines sich zwischen den Begrenzungsebenen 26a, 26b erstreckenden Schneidkantenverlaufsbereichs 30. Die Schneidkante 20 weist eine Axialerstreckung 28 im Bereich von 8-17 cm, bevorzugt eine Axialerstreckung 28 zwischen 9 und 13 cm auf.

Der Montagebereich 14 liegt innerhalb einer Montageebene 32. Die Montageebene 32 und die Begrenzungsebenen 26a, 26b verlaufen parallel zueinander. Die Rotationsachse 36 des Scheibenkörpers 12 verläuft orthogonal zu der Montageebene 32 und orthogonal zu dem Begrenzungsebenen 26a, 26b. Der Scheibenkörper 12 weist eine Scheibenhöhe 34 auf, welche größer als die Axialerstreckung 28 der Schneidkante 20 ist und welche dem Abstand zwischen der Montageebene 32 und der Begrenzungsebene 26b entspricht.

Die unteren Wellenkäme 22a-22f liegen in der unteren Begrenzungsebene 26a. Die oberen Wellenkämme 24a -24f liegen in der oberen Begrenzungsebene 26b. die Begrenzungsebenen 26a, 26b weisen folglich einen Abstand zueinander auf, welcher der Axialerstreckung 28 der Schneidkante 20 entspricht.

Der ungewellte Montagebereich 14 des Scheibenkörpers 12 und dessen Montageebene 32 sind außerhalb des Schneidkantenverlaufsbereichs 30, nämlich unterhalb des Schneidkantenverlaufsbereich 30 angeordnet. Die Montageebene 32 des ungewellten Montagebereichs 14 schneidet folglich die umlaufende Schneidkante 20 nicht. Der ungewellte Montagebereich 14 des Scheibenkörpers 12 und dessen Montageebene 32 liegen nicht zwischen den Begrenzungsebenen 26a, 26b.

Die Schneidkante 20 verläuft geneigt gegenüber der Rotationsachse 36. Der Neigungswinkel α zwischen dem Schneidkantenverlauf und der Rotationsachse 36 liegt in einem Bereich zwischen 7 und 12 Grad, beispielsweise bei 9 Grad. Somit ergibt sich ein konischer Schneidkantenverlauf, welcher sich in Axialrichtung des Scheibenkörpers 12, in diesem Fall nach oben, verjüngt. Durch die sich verjüngende Wellenform liegt die Schneidkante 20 in einer fiktiven Mantelfläche eines Kegelstumpfes.

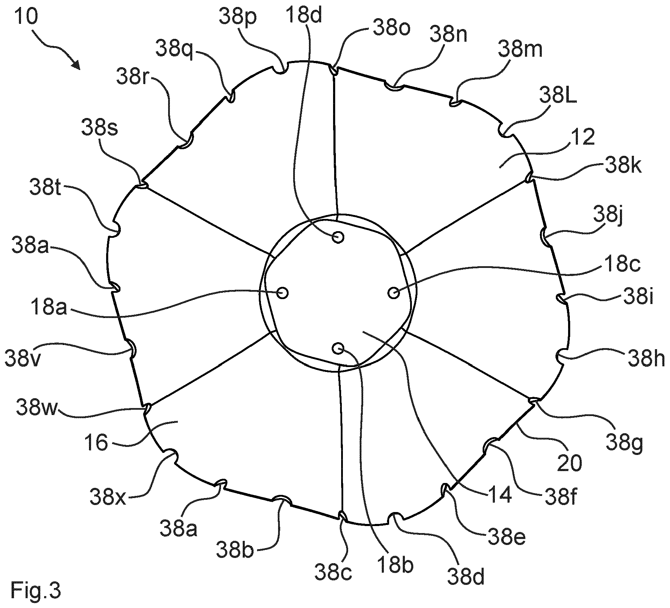

Die Fig. 3 zeigt, dass die Schneidkante 20 mehrere Unterbrechungen 38a-38x aufweist. Die Unterbrechungen 38a-38x sind gleichmäßig über den Umfang der Schneidkante 20 verteilt. Die Unterbrechungen 38a-38x befinden sich an den Scheitelpunkten der Wellenkämme 22a-22f, 24a-24f und mittig entlang der aufsteigenden und absteigenden Wellenflanken zwischen den Wellenkämmen 22a-22f, 24a-24f.

Die Unterbrechungen 38a-38x sind Einbuchtungen, welche sich von der Schneidkante 20 in Radialrichtung nach innen erstrecken. Die Einbuchtungen sind halbkreisförmig ausgebildet.

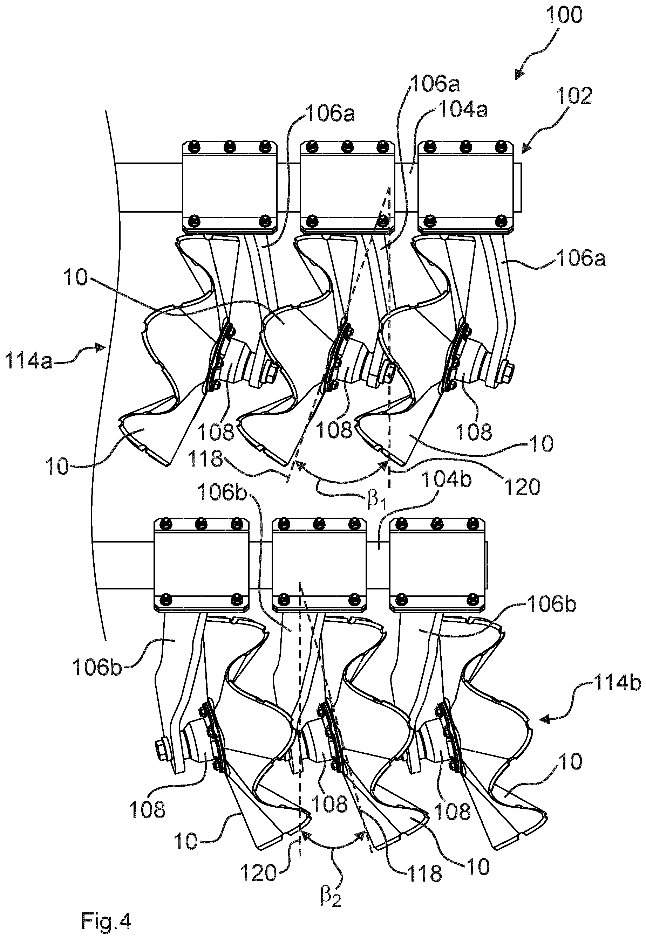

Die Fig. 4 zeigt einen Teil einer Bodenbearbeitungsmaschine 100. Die Bodenbearbeitungsmaschine 100 weist einen Maschinenrahmen 102 mit einem vorderen Querbalken 104a und einen hinteren Querbalken 104b auf. An dem vorderen Querbalken 104a sind Bodenbearbeitungswerkzeuge 10 über Werkzeughalter 106a befestigt. An dem hinteren Querbalken 104b sind Bodenbearbeitungswerkzeuge 10 über Werkzeughalter 106b befestigt. Zwischen den Werkzeughaltern 106a, 106b und den jeweiligen Bodenbearbeitungswerkzeugen 10 befindet sich jeweils ein Lager 108, welches eine Drehbewegung der Bodenbearbeitungswerkzeuge 10 während des Bearbeitungsvorgangs erlaubt.

Die an dem vorderen Querbalken 104a befestigten Bodenbearbeitungswerkzeuge 10 bilden eine erste Gruppe von Bodenbearbeitungswerkzeugen, welche entlang einer ersten Bearbeitungsreihe 114a angeordnet sind. Die an dem hinteren Querbalken 104b befestigten Bodenbearbeitungswerkzeuge 10 bilden eine zweite Gruppe von Bodenbearbeitungswerkzeugen 10, welche entlang einer zweiten Bearbeitungsreihe 114b angeordnet sind. Die Bodenbearbeitungswerkzeuge 10 der ersten Gruppe und die Bodenbearbeitungswerkzeuge 10 der zweiten Gruppe bilden gemeinsam ein zweireihiges Scheibenfeld. Die erste Bearbeitungsreihe 114a und die zweite Bearbeitungsreihe 114b sind beabstandet voneinander und verlaufen parallel zueinander.

Die Bodenbearbeitungswerkzeuge 10 sind jeweils über deren Montagebereich 14 an dem jeweiligen Werkzeughalter 106a, 106b montiert. Die Werkzeughalter 106a, 106b sind Trägerarme, welche einen Anstellwinkel 1, β₂ für die Bodenbearbeitungswerkzeuge 10 vorgeben. Die Bodenbearbeitungswerkzeuge 10 der ersten Bearbeitungsreihe 114a weisen dabei einen ersten Anstellwinkel β, auf und die Bodenbearbeitungswerkzeuge 10 der zweiten Bearbeitungsreihe 114b weisen einen von dem ersten Anstellwinkel β, abweichenden zweiten Anstellwinkel β₂ auf. Die Anstellwinkel β₁, β₂ entsprechen dem Winkel zwischen der Werkzeugebene 118 und einer in Fahrtrichtung verlaufenden Vertikalebene 120. Die Werkzeugebene 118 verläuft parallel zu der Montageebene 32 der Scheibenkörper 12. Der Anstellwinkel β, liegt in einem Bereich zwischen 5 und 20 Grad, vorliegend bei 17 Grad. Der Anstellwinkel β₂ liegt in einem Bereich zwischen 5 und 18 Grad, vorliegend bei 14 Grad.

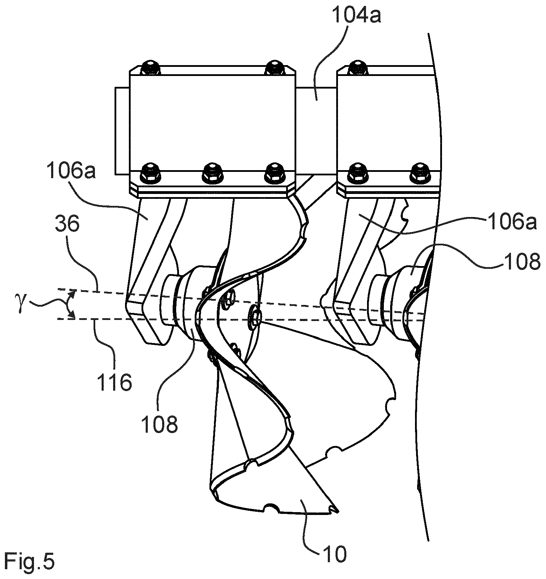

Die Fig. 5 zeigt, dass die Bodenbearbeitungswerkzeuge 10 einen Kippwinkel γ zum Boden aufweisen. Der Kippwinkel γ entspricht dem Winkel zwischen der Rotationsachse 36 und einer sich in Querrichtung erstreckenden Horizontalachse 116. Der Kippwinkel γ liegt in einem Bereich von 3 bis 15 Grad, vorliegend bei 6 Grad.

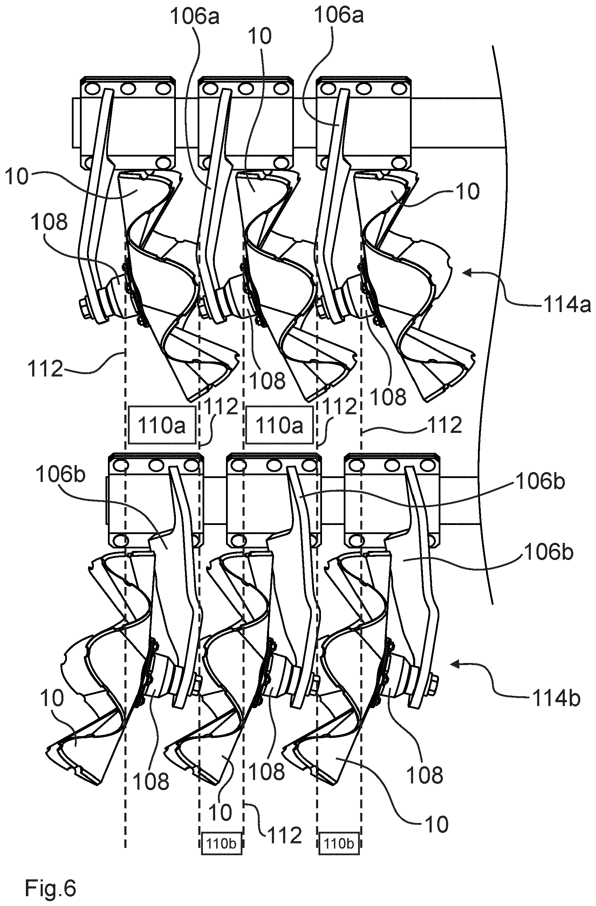

Die Fig. 6 zeigt, dass sich durch die unterschiedlichen Anstellwinkel β₁, β₂ der Bodenbearbeitungswerkzeuge 10 der Bearbeitungsreihen 114a, 114b unterschiedliche Eingriffsbereiche 110a, 110b in den Boden der landwirtschaftlichen Nutzfläche ergeben. Die dargestellten Eingriffsgrenzen 112 zeigen, dass die Eingriffsbereiche 110a der vorderen Bodenbearbeitungswerkzeuge 10 und die Eingriffsbereiche 110b der hinteren Bodenbearbeitungswerkzeuge 10 in Querrichtung unmittelbar nebeneinander liegen, sodass eine ganzflächige Bodenbearbeitung über die gesamte Arbeitsbreite der Bodenbearbeitungsmaschine 100 erfolgt.

### Bezugszeichenliste

- 10: Bodenbearbeitungswerkzeug
- 12: Scheibenkörper
- 14: Montagebereich
- 16: Scheibensegment
- 18a-18d: Montageausnehmungen
- 20: Schneidkante
- 22a-22f: Wellenkämme
- 24a-24f: Wellenkämme
- 26a, 26b: Begrenzungsebenen
- 28: Axialerstreckung
- 30: Schneidkantenverlaufsbereich
- 32: Montageebene
- 34: Scheibenhöhe
- 36: Rotationsachse
- 38a-38x: Unterbrechungen

- 100: Bodenbearbeitungsmaschine
- 102: Maschinenrahmen
- 104a, 104b: Querbalken
- 106a, 106b: Werkzeughalter
- 108: Lager
- 110a, 110b: Eingriffsbereiche
- 112: Eingriffsgrenzen
- 114a, 114b: Bearbeitungsreihen
- 116: Horizontalachse
- 118: Werkzeugebene
- 120: Vertikalebene

- α: Neigungswinkel
- β₁, β₂: Anstellwinkel
- γ: Kippwinkel

## Patentansprüche

1. Bodenbearbeitungswerkzeug (10), mit
- einem Scheibenkörper (12), welcher eine umlaufende Schneidkante (20) aufweist,
wobei die Schneidkante (20) eine Wellenform aufweist, wobei der Scheibenkörper (12) einen ungewellten Montagebereich (14) aufweist, welcher innerhalb einer Montageebene (32) liegt,
wobei die wellenförmige Schneidkante (20) zwischen zwei parallelen Begrenzungsebenen (26a, 26b) verläuft, wobei
der ungewellte Montagebereich (14) des Scheibenkörpers (12) und/oder dessen Montageebene (32) außerhalb eines sich zwischen den Begrenzungsebenen (26a, 26b) erstreckenden Schneidkantenverlaufsbereichs (30) angeordnet ist, **dadurch gekennzeichnet,**
**dass** die Schneidkante (20) eine Axialerstreckung (28) zwischen den Begrenzungsebenen (26a, 26b) in einem Bereich von 8 bis 17 cm aufweist.

2. Bodenbearbeitungswerkzeug (10) nach Anspruch 1,
**dadurch gekennzeichnet, dass** die Schneidkante (20) durchgängig geschwungen ausgebildet ist.

3. Bodenbearbeitungswerkzeug (10) nach Anspruch 1 oder 2,
**dadurch gekennzeichnet, dass** die Wellenform der Schneidkante (20) einer periodischen Funktion folgt und/oder eine Sinusform aufweist.

4. Bodenbearbeitungswerkzeug (10) nach einem der vorstehenden Ansprüche,
**dadurch gekennzeichnet, dass** die Schneidkante (20) eine Axialerstreckung (28) in einem Bereich von 9 bis 13 cm aufweist.

5. Bodenbearbeitungswerkzeug (10) nach einem der vorstehenden Ansprüche,
**dadurch gekennzeichnet, dass** die Schneidkante (20) 10 bis 14, bevorzugt exakt 12, Wellenkämme (22a-22f, 24a-24f) aufweist.

6. Bodenbearbeitungswerkzeug (10) nach einem der vorstehenden Ansprüche,
**dadurch gekennzeichnet, dass** die Schneidkante (20) mehrere Unterbrechungen (38a-38x) aufweist.

7. Bodenbearbeitungswerkzeug (10) nach einem der vorstehenden Ansprüche,
**dadurch gekennzeichnet, dass** der Scheibenkörper (12) eine Rotationsachse (36) aufweist und die Schneidkante (20) geneigt gegenüber der Rotationsachse (36) verläuft.

8. Bodenbearbeitungswerkzeug (10) nach einem der vorstehenden Ansprüche,
**dadurch gekennzeichnet, dass** die Schneidkante (20) in einer fiktiven Mantelfläche eines Kegelstumpfes liegt.

9. Bodenbearbeitungsmaschine (100), mit
- einer ersten Gruppe von Bodenbearbeitungswerkzeugen (10), welche entlang einer ersten Bearbeitungsreihe (114a) angeordnet sind; und
- einer zweiten Gruppe von Bodenbearbeitungswerkzeugen (10), welche entlang einer zweiten Bearbeitungsreihe (114b) angeordnet sind;
**dadurch gekennzeichnet, dass** zumindest ein Bodenbearbeitungswerkzeug (10) der ersten Gruppe und zumindest ein Bodenbearbeitungswerkzeug (10) der zweiten Gruppe nach einem der vorstehenden Ansprüche ausgebildet ist.

10. Bodenbearbeitungsmaschine (100) nach Anspruch 9,
**dadurch gekennzeichnet, dass** die Bodenbearbeitungswerkzeuge (10) der ersten Bearbeitungsreihe (114a) einen ersten Anstellwinkel (β₁) aufweisen und die Bodenbearbeitungswerkzeuge (10) der zweiten Bearbeitungsreihe (114b) einen von dem ersten Anstellwinkel (β₁) abweichenden zweiten Anstellwinkel (β₂) aufweisen.

11. Bodenbearbeitungsmaschine (100) nach Anspruch 10,
**dadurch gekennzeichnet, dass** der erste Anstellwinkel (β₁) der ersten Bearbeitungsreihe (114a) in einem Bereich zwischen 5 und 20 Grad, vorzugsweise zumindest annährend bei 17 Grad, liegt und/oder der zweite Anstellwinkel (β₂) der zweiten Bearbeitungsreihe (114b) in einem Bereich zwischen 5 und 18 Grad, vorzugsweise zumindest annährend bei 14 Grad, liegt.

## Claims

1. Soil-working tool (10), comprising
- a disk body (12) which has a circumferential cutting edge (20),
the cutting edge (20) having a wave shape, the disk body (12) having a mounting region (14) without a wave shape, which mounting region lies within a mounting plane (32),
the wave-shaped cutting edge (20) extending between two parallel boundary planes (26a, 26b), the mounting region (14) of the disk body (12) without a wave shape and/or the mounting plane (32) thereof being arranged outside a cutting edge extending region (30) that extends between the boundary planes (26a, 26b), **characterized in that** the cutting edge (20) has an axial extension (28) between the boundary planes (26a, 26b) in a range of 8 to 17 cm.

2. Soil-working tool (10) according to claim 1,
**characterized in that** the cutting edge (20) is continuously curved.

3. Soil-working tool (10) according to claim 1 or 2,
**characterized in that** the wave shape of the cutting edge (20) follows a periodic function and/or has a sinusoidal shape.

4. Soil-working tool (10) according to any of the preceding claims,
**characterized in that** the cutting edge (20) has an axial extension (28) in a range of 9 to 13 cm.

5. Soil-working tool (10) according to any of the preceding claims,
**characterized in that** the cutting edge (20) has 10 to 14, preferably exactly 12, wave crests (22a-22f, 24a-24f).

6. Soil-working tool (10) according to any of the preceding claims,
**characterized in that** the cutting edge (20) has a plurality of interruptions (38a-38x).

7. Soil-working tool (10) according to any of the preceding claims,
**characterized in that** the disk body (12) has a rotational axis (36) and the cutting edge (20) extends in an inclined manner with respect to the axis of rotation (36).

8. Soil-working tool (10) according to any of the preceding claims,
**characterized in that** the cutting edge (20) lies in a fictitious lateral surface of a truncated cone.

9. Soil-working machine (100), comprising
- a first group of soil-working tools (10), which are arranged in a first working row (114a); and
- a second group of soil-working tools (10), which are arranged in a second working row (114b);
**characterized in that** at least one soil-working tool (10) of the first group and at least one soil-working tool (10) of the second group is designed according to any of the preceding claims.

10. Soil-working machine (100) according to claim 9,
**characterized in that** the soil-working tools (10) of the first working row (114a) have a first angle of attack (β₁) and the soil working tools (10) of the second working row (114b) have a second angle of attack (β₂) different from the first angle of attack (β₁).

11. Soil-working machine (100) according to claim 10,
**characterized in that** the first angle of attack (β₁) of the first working row (114a) is in a range between 5 and 20 degrees, preferably at least approximately 17 degrees, and/or the second angle of attack (β₂) of the second working row (114b) is in a range between 5 and 18 degrees, preferably at least approximately 14 degrees.

## Revendications

1. Outil de travail du sol (10), comportant
- un corps formant disque (12), lequel présente une arête coupante (20) circonférentielle,
dans lequel l'arête coupante (20) présente une forme ondulée, dans lequel le corps formant disque (12) présente une zone de montage non ondulée (14) qui se trouve à l'intérieur d'un plan de montage (32),
dans lequel l'arête coupante (20) ondulée s'étendant entre deux plans de délimitation (26a, 26b) parallèles, dans lequel la zone de montage non ondulée (14) du corps formant disque (12) et/ou son plan de montage (32) sont disposés à l'extérieur d'une zone de tracé d'arête coupante (30) s'étendant entre les plans de délimitation (26a, 26b), **caractérisé en ce que** l'arête coupante (20) présente une extension axiale (28) entre les plans de délimitation (26a, 26b) dans une plage allant de 8 à 17 cm.

2. Outil de travail du sol (10) selon la revendication 1,
**caractérisé en ce que** l'arête coupante (20) est réalisée de manière à être incurvée en continu.

3. Outil de travail du sol (10) selon la revendication 1 ou 2,
**caractérisé en ce que** la forme ondulée de l'arête coupante (20) suit une fonction périodique et/ou présente une forme sinusoïdale.

4. Outil de travail du sol (10) selon l'une des revendications précédentes,
**caractérisé en ce que** l'arête coupante (20) présente une étendue axiale (28) comprise dans une plage allant de 9 à 13 cm.

5. Outil de travail du sol (10) selon l'une des revendications précédentes,
**caractérisé en ce que** l'arête coupante (20) présente 10 à 14, de préférence exactement 12 crêtes d'ondulation (22a-22f, 24a-24f).

6. Outil de travail du sol (10) selon l'une des revendications précédentes,
**caractérisé en ce que** l'arête coupante (20) présente plusieurs discontinuités (38a-38x).

7. Outil de travail du sol (10) selon l'une des revendications précédentes,
**caractérisé en ce que** le corps formant disque (12) présente un axe de rotation (36) et l'arête coupante (20) s'étend de manière inclinée par rapport à l'axe de rotation (36).

8. Outil de travail du sol (10) selon l'une des revendications précédentes,
**caractérisé en ce que** l'arête coupante (20) se situe dans une surface d'enveloppe fictive d'un cône tronqué.

9. Machine de travail du sol (100), comportant
- un premier groupe d'outils de travail du sol (10), lesquels sont disposés le long d'une première ligne de travail (114a) ; et
- un second groupe d'outils de travail du sol (10), lesquels sont disposés le long d'une seconde ligne de travail (114b) ;
**caractérisée en ce qu'**au moins un outil de travail du sol (10) du premier groupe et au moins un outil de travail du sol (10) du second groupe sont conçus selon l'une des revendications précédentes.

10. Machine de travail du sol (100) selon la revendication 9,
**caractérisée en ce que** les outils de travail du sol (10) de la première ligne de travail (114a) présentent un premier angle d'attaque (β₁) et les outils de travail du sol (10) de la seconde ligne de travail (114b) présentent un second angle d'attaque (β₂) différent du premier angle d'attaque (β₁).

11. Machine de travail du sol (100) selon la revendication 10,
**caractérisée en ce que** le premier angle d'attaque (β₁) de la première ligne de travail (114a) se situe dans une plage comprise entre 5 et 20 degrés, de préférence est au moins approximativement de 17 degrés, et/ou le second angle d'attaque (β₂) de la seconde ligne de travail (114b) se situe dans une plage comprise entre 5 et 18 degrés, de préférence est au moins approximativement de 14 degrés.
